(19) Europäisches Patentamt
European Patent Office
Office européen des brevets

(11) **EP 4 545 486 A1**

(12) **EUROPEAN PATENT APPLICATION**

(43) Date of publication:
**30.04.2025 Bulletin 2025/18**

(21) Application number: **23205837.0**

(22) Date of filing: **25.10.2023**

(51) International Patent Classification (IPC):
**C01G 53/10** $^{(2006.01)}$

(52) Cooperative Patent Classification (CPC):
**C01G 53/10;** C01P 2004/61; C01P 2006/11;
C01P 2006/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BASF SE
67056 Ludwigshafen am Rhein (DE)**

(72) Inventors:
• **Volkov, Aleksei
67056 Ludwigshafen am Rhein (DE)**
• **Lytollis, David John
10585 Berlin (DE)**
• **Frischhut, Sabine
67056 Ludwigshafen am Rhein (DE)**

(74) Representative: **BASF IP Association
BASF SE
GBI - Z078
67056 Ludwigshafen (DE)**

(54) **FACILE TRANSPORTATION OF NICKEL SULFATE**

(57) Process for the manufacture of a precursor of a cathode active material for lithium-ion batteries wherein said cathode active material comprises at least 60 mol-% nickel, referring to metals other than lithium:

(a) providing crystalline nickel sulfate hexahydrate or heptahydrate crystals or an aqueous solution of nickel sulfate,

(b) removing water including water of crystallization at a temperature in the range of from 150 to 500°C,

(c) recovering nickel sulfate with an average content of water of crystallization of 0.01 to 3.5 mol/mol Ni,

(d) transporting anhydrous nickel sulfate from step (c) to a location over at least 100 km,

(e) dissolving anhydrous nickel sulfate from step (c) in an aqueous medium,

(f) combining the aqueous medium with the dissolved nickel sulfate obtained in step (e) with a solution or solid particles of cobalt sulfate or manganese sulfate and subsequently with an aqueous solution of sodium hydroxide in one or more sub-steps.

**EP 4 545 486 A1**

**Description**

The present invention is directed towards a process for the manufacture of a precursor of a cathode active material for lithium-ion batteries wherein said cathode active material comprises at least 60 mol-% nickel, referring to metals other than lithium:

(a) providing crystalline nickel sulfate hexahydrate or heptahydrate crystals or an aqueous solution of nickel sulfate,
(b) removing water including water of crystallization at a temperature in the range of from 150 to 500°C,
(c) recovering nickel sulfate with an average content of water of crystallization of 0.01 to 3.5 mol/mol Ni,
(d) transporting anhydrous nickel sulfate from step (c) to a location over at least 100 km,
(e) dissolving anhydrous nickel sulfate from step (c) in an aqueous medium,
(f) combining the aqueous medium with the dissolved nickel sulfate obtained in step (e) with a solution or solid particles of cobalt sulfate or manganese sulfate and subsequently with an aqueous solution of sodium hydroxide in one or more substeps.

In addition, the present invention is directed towards a certain modification of nickel sulfate.

Lithiated transition metal oxides are currently used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.

In a typical process for making cathode materials for lithium-ion batteries, first a so-called precursor is being formed by co-precipitating the transition metals as carbonates, oxides or preferably as hydroxides that may or may not be basic, for example oxyhydroxides. The precursor is then mixed with a source of lithium such as, but not limited to LiOH, $Li_2O$ or $Li_2CO_3$ and calcined (fired) at high temperatures. Lithium source(s) can be employed as hydrate(s) or in dehydrated form. The calcination - or firing - often also referred to as thermal treatment or heat treatment of the precursor - is usually carried out at temperatures in the range of from 600 to 1000 °C. During the thermal treatment a solid-state reaction takes place, and the electrode active material is formed. The thermal treatment is performed in the heating zone of an oven or kiln.

Starting materials for the precursors are usually the sulfates of the respective transition metals, especially of nickel. Sulfates usually are thermally stable, and - unlike chloride - sulfate does not create corrosion issues.

However, since nickel sulfate is produced in close vicinity to the ores where nickel is won, significant transportation costs are caused. Said costs add to the manufacturing costs of the respective precursors and to the costs of the costs of the cathode active materials.

It was an objective of the present invention to provide a process for making precursors for cathode active materials for lithium-ion batteries that will trigger lower costs for transportation without lowering the quality of the precursors and the electrochemical performance of cathode active materials.

Accordingly, the process as defined at the outset was found, hereinafter also defined as inventive process. The inventive process comprises step (a), step (b), step (c), step (d), step (e) and step (f), hereinafter in brief also referred to as (a), (b), (c), (d), (e) and (f). The steps (a) to (f) are described in more detail below.

It has been assessed that in transportation of nickel sulfate, due to the fact that the commercially available nickel is usually provided as hexahydrate complex, $NiSO_4 \cdot 6\,H_2O$, only 22.3 % by weight of the nickel sulfate is nickel. It was therefore an objective to increase the share of nickel in the transported material. It was now found that by removing water, the transportation costs may be decreased despite the reduction of density of the transported material.

Precursors as manufactured in accordance with the inventive process are selected from (oxy)hydroxides, oxides and carbonates of transition metals of which at least 60 mol-% nickel, preferably at least 80 mol-% and even more preferably at least 90 mol-%. The higher the percentage of nickel, the higher will be the benefit. Although precursors made according to the inventive process may be a pure (oxy)hydroxide of nickel, transition metals other than nickel, such as cobalt and manganese, are of importance as well.

In a one embodiment of the present invention, precursors as manufactured according to the inventive process contain at least one of cobalt, manganese and aluminum, preferably at least two, for example manganese and cobalt or aluminum and cobalt, for example up to 10 mol-% of cobalt and up to 10 mol-% of manganese, or 3 to 5 mol-% of cobalt and 3 to 5 mol-% of manganese.

Precursors manufactured in accordance with the present invention may further contain 50 to 250 ppm of magnesium, ppm referring to the respective precursor.

Precursors as manufactured in accordance with the inventive process are particulate (oxy)hydroxides, oxides or carbonates of a metal component, hereinafter also referred to as TM, and at least 60 mol-% nickel, preferably at least 80 mol-% and even more preferably at least 90 mol-% of TM is nickel. The term oxyhydroxide is not limited to compounds with as many hydroxide ions as oxide ions but to compounds of TM in general that bear oxide and hydroxide ions in a molar ratio of from 1:20 to 20:1.

In each case, TM may contain traces of further metal ions other than the above, for example traces of ubiquitous metals such as sodium, calcium, iron, or zinc, as impurities but such traces will not be taken into account in the description of the present invention. Traces in this context will mean amounts of 0.05 mol-% or less, referring to the total metal content of TM.

(Oxy)hydroxides and oxides of TM may contain traces of further counterions, for example carbonate. Each (oxy)hydroxides and oxides and carbonates of TM may contain traces of sulphate. Such traces are neglected in the further description of the present invention.

Precursors as used herein are particulate materials. In one embodiment of the present invention, precursors manufactured in accordance with the inventive process have an average particle diameter D50 in the range of from 3 to 20 $\mu$m, preferably from 4 to 16 $\mu$m. The average particle diameter may be determined, e. g., by light scattering or LASER diffraction or electroacoustic spectroscopy. The particles are composed of primary particles, in particular they are agglomerates of primary particles, and the above particle diameter refers to the secondary particle diameter. Although (D50) is - strictly speaking - the median value rather than an average diameter both expressions are used interchangeably.

In one embodiment of the present invention, the span of the particle diameter distribution of precursors manufactured in accordance with the inventive process is in the range of from 0.2 to 2.0, preferably from 0.25 to 0.35 or from 0.6 to 1.5. The span is defined as [(D90) - (D10)]/(D50), with the values of (D90), (D50) and (D10) being the respective percentiles determined by LASER diffraction or by X-ray diffraction.

In one embodiment of step (a), crystals of $NiSO_4 \cdot 6 \ H_2O$ are provided. Such crystalline $NiSO_4 \cdot 6 \ H_2O$ is commercially available. Such crystals are emerald colored. Crystalline $NiSO_4 \cdot 6 \ H_2O$ containing some $NiSO_4 \cdot 7 \ H_2O$ is encompassed, but $NiSO_4 \cdot 6 \ H_2O$ without the heptahydrate is preferred. In one embodiment, crystals of $NiSO_4 \cdot 6 \ H_2O$ may have a diameter (d50) in the range of from 0.5 to 5 mm, preferably 1 to 3 mm.

In an alternative embodiment of the present invention, an aqueous solution of $NiSO_4 \cdot 6 \ H_2O$ is provided in step (a). The complex ion is also referred to as hexaquo complex. Said solution may have a concentration of from 100 to 650 g/l water.

Providing a crystalline $NiSO_4 \cdot 6 \ H_2O$ is preferred.

In step (b), water is removed at a temperature in the range of from 150 to 500°C, preferably 150 to 500°C, more preferably 325 to 355°C. Said water removal may be performed in various vessels, for example in pans, crucibles, pots or the like. In laboratory scale, for example for 100 mg to 150 g, crucibles are preferred. The temperature of 150 to 500°C then refers to the bottom of the respective vessel.

In order to prevent the formation of sheets or films on one hand and of boiling retardation on the other hand, it is possible to stir aqueous solution that is heated in a crucible or pan or pot.

In embodiments where step (b) is performed in pans, crucibles, pots or the like, it is preferred to close such vessel with a layer in order to prevent crystals from "jumping" out of the vessel, for example a lid with one or more holes, or a sieve. In laboratory scale experiments, pans or crucibles may be covered with aluminum foil that does not close tightly.

In one embodiment of the present invention, crucibles, pans or pots may be moved during step (b), e.g., by vibration, in order to prevent scale formation and in order to mix crystals and prevent them from "jumping" out of the vessel.

In one embodiment of the present invention, water removal is performed by spray-drying, for example in a spray tower, and the temperature of 150 to 500°C refers to the gas inlet temperature. As gas, air may be used, but nitrogen and oxygen-depleted air are preferred.

In one embodiment of the present invention, spraying is performed through one or more nozzles per drying vessel. Suitable nozzles are, for example, high-pressure rotary drum atomizers, rotary atomizers, single-fluid nozzles and two-fluid nozzles, two-fluid nozzles and rotary atomizers being preferred. The first fluid is aqueous solution or slurry provided according to step (a), the second fluid is compressed gas, for example air or nitrogen or oxygen-depleted air with a pressure of from 1.1 to 7 bar.

In one embodiment of the present invention, the droplets formed in spray-drying have a diameter in the range of from 1 to 500 $\mu$m, preferably from 10 to 180 $\mu$m, more preferably 20 to 175 $\mu$m.

In another embodiment of the present invention, step (b) is performed in a fluidized bed, in a moving bed or in a fixed bed, for example in a fluidized bed dryer, and the temperature of 150 to 500°C refers to the fluidization gas inlet temperature.

The off-gas usually has a temperature lower than the temperature of the gas inlet stream, for example 105 to 150°C. The off-gas is usually humid.

Step (b) may be performed under air. In one embodiment of the present invention, step (b) is performed under an atmosphere of nitrogen or oxygen-depleted air, for example with an oxygen content of 1 to 15% by volume. Air is preferred.

In order to prevent dusting of nickel sulfate, the humid off-gas generated in spray-drying or fluidized bed-based embodiments of step (b) is preferably cleaned by filters, cyclones, or preferably by a combination of at least one cyclone and at least one filter.

In one embodiment of the present invention, wherein step (b) is performed in a pot, crucible or pan, the residence time is in the range of from one to 10 hours.

In step (c), nickel sulfate with an average content of water of crystallization of 0.01 to 3.5 mol/mol Ni is recovered. Said nickel sulfate will also be referred to as "anhydrous" nickel sulfate. The composition is determined by elemental analysis. Preferred are 0.01 to 0.2 mol water of crystallization per mol of nickel or 2.1 to 2.7 mol water of crystallization per mol Ni.

In one embodiment of the present invention, anhydrous nickel sulfate is recovered as fluffy solid with irregularly formed particles.

In a preferred embodiment of the present invention, anhydrous nickel sulfate recovered in step (c) has a pressed density in the range of from 0.55 to 1.0 g Ni/ml at 200 MPa.

Instead of using fossil-based energy or nuclear power or an energy mix of the foregoing, in step (b) of the inventive process, solely or to a vast extent, for example at least 80% of the electricity used is generated from non-fossil sources and other than by nuclear power. Examples of non-fossil sources wind energy, solar energy and tide power. Preferred are thus embodiments wherein the electricity used for step (b) is generated from a wind turbine, by solar power, by geothermal power, by hydroelectricity or by tide power, or a combination of at least two of the ways mentioned before. Wind turbine shall include a combination of more than one wind turbine. Wind turbines and solar power are preferred.

In one embodiment of the present invention, the concentration of nickel in anhydrous nickel sulfate recovered in step (c) is in the range of from 31 to 38 % by weight.

In step (d), anhydrous nickel sulfate from step (c) is transported to a location over at least 100 km, for example in flexible intermediate bulk containers, so-called big bags, or in a silo, for example in a silo similar to silos suitable for the transportation of cement. Big bags and especially silos may be transported by truck, by train or by aircraft, or by ship or by a combination of at least two of the foregoing. It is possible as well to store a big bag or a silo on a trailer of a truck and to then transport such trailer by train or ship for at least some distance. A potential maximum distance is 25,000 km, preferably up to 19,000 km.

In one embodiment of the present invention, a silo has a length in the range of from 10 to 40 feet (3.3 to 15 meters), preferably 4 to 9.5 meters.

One preferred example of a silo is a container with a steep conical outlet. In one embodiment, the design with a steep conical outlet is an interchangeable silo. Interchangeable containers are typically 4 to 9.5 m in total height, 1.5 to 2 m and preferably 2.5 m in diameter and 1.5 to 7 m, more preferred 2 to 4 m in cylinder length. They are equipped with mounting fittings so that they can be connected to and loaded onto transport cars by changing systems, in the context of the present invention also referred to as "connector to changing systems".

Packaging for anhydrous nickel sulfate from step (c) is preferably water-tight in order to reduce or prevent access of humidity.

In step (e), anhydrous nickel sulfate from step (c) is dissolved in an aqueous medium, for example in water, preferably in desalinated water. Said dissolution takes place at the destination reached in step (d).

In one embodiment of the present invention, aqueous medium may contain sulfuric acid, for example to adjust the pH value to 2 to 5.

The order of addition of nickel sulfate and water may be selected freely. The concentration of nickel may be selected in wide ranges, concentrations in the range of from 0.5 to 5 mol/l, preferably 1 to 3 mol/l are feasible.

Step (e) may be performed at a temperature in the range of from 5 to 50°C, ambient temperature being preferred.

In one embodiment of the present invention, a filtration step takes place. However, in many embodiments a filtration step is not required because step (d) directly furnishes a clear solution.

An aqueous solution of nickel sulfate is obtained from step (e).

Said aqueous solution may have a pH value in the range of from 2.0 to 6.0, preferably 2.5 to 5.7, determined at 23°C.

Step (f) includes combining the aqueous medium with the dissolved nickel sulfate obtained in step (e) with a solution or solid particles of cobalt sulfate or manganese sulfate or of an aluminum compound and subsequently with an aqueous solution of sodium hydroxide or (bi)carbonate in one or more sub-steps.

In said combination, it is taken care that the molar ratio of nickel sulfate is at least 60 % with reference to metals such as cobalt, manganese and aluminum, as the case may be, preferably at least 80 mol-% and more preferably at least 90 mol-%. Metals in the context of step (f) are metals other than alkali metal.

Step (f) may be performed in a continuous mode or in a batch mode.

In embodiments wherein (oxy)hydroxides are precipitated, it is preferred to control the stoichiometry of transition metal salts to hydroxide in a way that the molar ratio of transition metal to hydroxide is in the range of from 1:2 to 1:2.5.

In embodiments wherein carbonates are precipitated, it is preferred to control the stoichiometry of transition metal salts to carbonate in a way that the molar ratio of transition metal to carbonate is in the range of from 1:1 to 1:1.25.

Aqueous solution of sodium hydroxide may have a concentration of hydroxide in the range from 0.1 to 10 mol/l, preferably 1 to 7.5 mol/l.

Aqueous solution of alkali metal hydroxide may comprise one or more further salts, for example ammonium compounds, especially ammonium hydroxide, ammonium sulfate or ammonium sulfite. In one embodiment, a molar $NH_3$: transition metal ratio of 0.01 to 0.9 and more preferably of 0.08 to 0.65 can be established.

Step (f) may be performed at a temperature in the range of from 20 to 75°C, preferably 45 to 70°C.

Step (f) is preferably performed under an atmosphere of nitrogen or strongly oxygen-depleted air, for example under an atmosphere that contains 0.1 to 2 vol-% oxygen.

In one embodiment of the present invention, step (f) is performed at a pH value in the range of from 9.5 to 13.0.

In one embodiment of the present invention, step (f) is performed in two sub-steps, with the sub-step (f-1) being performed at a pH value in the range of from 11.0 to 13.5 and sub-step (f-2) is performed at a pH value in the range of from 9.5 to 11.0 but in any case at least 0.5 units below the pH value of step (f-1). Thus, for example, if step (f-1) is performed at a pH value of 11.0, the pH value of step (f-2) is 10.5 at most.

The inventive process allows a facile transportation of nickel sulfate. Tonnage in form of water of crystallization is strongly reduced.

A further aspect of the present invention is related to particulate $NiSO_4$ with an average content of water of crystallization of 0.01 to 3.5 mol/mol Ni, and with a pressed density in the range of from 0.55 to 1.0 g $Ni/cm^3$, wherein the majority of the nickel sulfate particles have an irregular shape. Such particulate $NiSO_4$ is an intermediate used in the inventive process, and it is hereinafter also referred to as inventive $NiSO_4$.

In one embodiment of the present invention, the particles of inventive $NiSO_4$ have a median diameter (D50) in the range of from 1 $\mu$m to 250 $\mu$m, preferably 2 to 150 $\mu$m. In embodiments wherein a spray-drying is performed, a median diameter in the range of from 8 to 15 $\mu$m is preferred, determined by LASER diffraction.

In one embodiment of the present invention, the particles of inventive $NiSO_4$ have a form factor (average) in the range of from 0.5 to 0.8.

To determine the form factor (averaged), it will first be determined for at least 50 individual particles of each sample and then averaged.

The form factor of the individual particles is calculated from the perimeter and area determined from top view SEM images:

$$\text{Form factor} = (4\pi \cdot \text{area})/(\text{perimeter})^2$$

While a perfect sphere would possess a form factor of 1.0, any deviation from perfect sphericity will lead to form factors < 1.0

In embodiment wherein a spray drying is performed, the particles of inventive $NiSO_4$ preferably have the appearance of hollow spherical particles.

Inventive anhydrous nickel sulfate displays a certain hygroscopicity and should not be stored under ambient air or in the presence of humidity. Packaging for transport, for example according to step (d) of the inventive process, should be water-tight.

The present invention is further illustrated by working examples.

$NiSO_4 \cdot 6\,H_2O$ (analysis grade) crystals were purchased from CHEMSOLUTE. Particle diameter a few millimeters.

I. Drying in a spray tower

Step (a.1):

An amount of 381.1 g $NiSO_4 \cdot 6\,H_2O$ was dissolved in 1 liter of desalinated water. The resultant solution was 8.5% by weight in nickel.

Step (b.1)/(b.2):

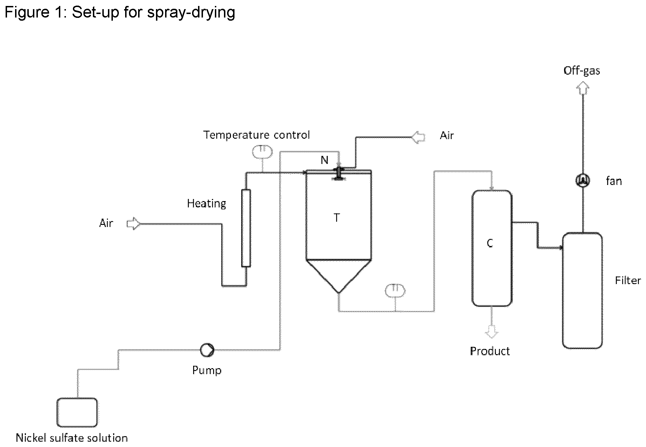

For the spray-drying according to step (b.1) and (b.2), respectively, a commercially available GEA Niro spray tower in accordance with Figure 1 was used.

Explanation of Figure 1:

N: nozzle
T: spray tower
C: cyclone

The settings were chosen as follows:

- air, inlet temperature: 350°C
- Gas outlet temperature: 140°C
- Batch (b.1): 90% fan power, 8.89 Nm/s
- Batch (b.2): 60% fan power, 7.52 Nm/s

Step (c.1):

From batch (b.1), a fluffy powder was obtained, formula $NiSO_4 \cdot 2.3\,H_2O$.

From batch (b.2), a fluffy powder was obtained, formula $NiSO_4 \cdot 2.6\,H_2O$. The compositions were determined by elemental analyses.

Step (d.1) and (d.2), respectively:

The fluffy materials obtained from (b.1) and (b.2) were filled into glass bottles. The bottles were sealed with polymer film. They can be transported over 100 km or more.

Steps (e.1) and (e.2)

In Erlenmeyer flasks, each 33.25 g of the fluffy materials obtained from (b.1) and (b.2), respectively, were re-dissolved in 100 ml desalinated water to obtain aqueous solutions with a concentration of 10% by weight of nickel. Filtration did not reveal any solid residue.

Step (f.1): A spherical $Ni(OH)_2$ precursor was made by combining aqueous nickel sulfate solution from step (e.1) with an aqueous 25 wt.% NaOH solution and using ammonia as complexation agent. The pH value was set at 12.6. The freshly precipitated $Ni(OH)_2$ was washed with water, sieved and dried at 120 °C for 12 hours. p-CAM.1 was $Ni(OH)_2$ with a D50 of 6.5 $\mu$m.

II. Drying in a muffle oven

Step (a.3): solid $NiSO_4 \cdot 6\,H_2O$, particle diameter about 1 to 3 mm, was obtained commercially.

Step (b.3): A crucible was filled with 100 g of $NiSO_4 \cdot 6\,H_2O$ from step (a.2) and placed in a muffle oven with a flow of argon. The temperature was raised to 500°C and maintained for 8 hours. In order to prevent crystals from "jumping" out of the crucibles it was covered with aluminum foil that did not close tightly, so steam was allowed to escape. Then, the crucible was removed and allowed to cool naturally to ambient temperature.

Step (c.3): $NiSO_4 \cdot 0.01\,H_2O$ as a yellow powder was removed from the crucible. $NiSO_4 \cdot 0.01\,H_2O$ as obtained in step (c.3) was less fluffy than the $NiSO_4 \cdot 2.3\,H_2O$ as obtained in (b.1) and (c.1). The shape of the particles was irregular. Particle diameters of from 2 $\mu$m up to 150 $\mu$m were observed (SEM).

Step (d.3): The powder obtained from (b.3) and (c.3) was filled into glass bottles in a glove box. The glass bottles were sealed with polymer film. They can be transported over 100 km or more.

Step (e.3): In an Erlenmeyer flask, 33.25 g of compact powder obtained from (b.3) and (c.3) was re-dissolved in 100 ml desalinated water to obtain an aqueous solution with a concentration of 10% by weight of nickel. Filtration did not reveal substantial amounts of solid residue.

Step (f.3): A spherical $Ni(OH)_2$ precursor was made by combining aqueous nickel sulfate solution from step (e.3) with an aqueous 25 wt.% NaOH solution and using ammonia as complexation agent. The pH value was set at 12.6. The freshly precipitated $Ni(OH)_2$ was washed with water, sieved and dried at 120 °C for 12 hours. p-CAM.3 was $Ni(OH)_2$ with a D50 of 6.6 $\mu$m.

The above process may be repeated but with a temperature of 150°C, step (b.4) or 300°C, step (b.5).

Step (c.4): $NiSO_4 \cdot 1.9\,H_2O$ as a mint green powder was removed from the crucible.

Step (c.5): $NiSO_4 \cdot 0.5\,H_2O$ as a mint green powder was removed from the crucible.

## Claims

1. Process for the manufacture of a precursor of a cathode active material for lithium-ion batteries wherein said cathode active material comprises at least 60 mol-% nickel, referring to metals other than lithium:

    (a) providing crystalline nickel sulfate hexahydrate or heptahydrate crystals or an aqueous solution of nickel sulfate,
    (b) removing water including water of crystallization at a temperature in the range of from 150 to 500°C,
    (c) recovering nickel sulfate with an average content of water of crystallization of 0.01 to 3.5 mol/mol Ni,
    (d) transporting anhydrous nickel sulfate from step (c) to a location over at least 100 km,

    (e) dissolving anhydrous nickel sulfate from step (c) in an aqueous medium,
    (f) combining the aqueous medium with the dissolved nickel sulfate obtained in step (e) with a solution or solid particles of cobalt sulfate or manganese sulfate and subsequently with an aqueous solution of sodium hydroxide or (bi) carbonate in one or more sub-steps.

2. Process according to claim 1 wherein step (b) is performed by spray-drying or in a fluidized bed dryer, and the temperature refers to the inlet temperature of the respective gas used for spray-drying or fluidization.

3. Process according to claim 1 or 2 wherein step (b) is performed under an atmosphere of air, nitrogen or oxygen-depleted air.

4. Process according to any of the preceding claims wherein step (d) is performed in a big bag.

5. Particulate $NiSO_4$ with an average content of water of crystallization of 0.01 to 3.5 mol/mol Ni, and with a pressed density in the range of from 0.55 to 1.0 g nickel/cm$^3$ at a pressure of 200 MPa, wherein the majority of the nickel sulfate particles have an irregular shape or have the appearance of hollow spherical particles.

6. Particulate $NiSO_4$ according to claim 5 wherein the particles have a diameter (D50) in the range of from 1 to 150 $\mu$m.

7. Particulate $NiSO_4$ according to claim 5 or 6 wherein the majority of the nickel sulfate particles have the appearance of hollow spherical particles with an average diameter (D50) in the range of from 8 to 15 $\mu$m, determined by LASER diffraction.

8. Particulate $NiSO_4$ according to claim 5 or 6, wherein said particles have a form factor in the range of from 0.5 to 0.8.

Figure 1: Set-up for spray-drying

Europäisches
Patentamt

European
Patent Office

Office européen
des brevets

# EUROPEAN SEARCH REPORT

Application Number

**EP 23 20 5837**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L.H. Adami Et.Al.: "Heats of formation of anhydrous sulfates of cadmium, cobalt, copper, nickel and zink" In: "Bureau of mines Report of investigations 6617", 1 January 1965 (1965-01-01), XP093155530, pages 1-6, | 5-8 | INV. C01G53/10 |
| Y | * page 6, paragraph 4 – paragraph 4 * ----- | 1-4 | |
| X | TSUNEICHI TAKESHITA: "Acid Property and Structure of a Solid Metal Sulfate Catalyst. Change in Structure of Nickel Sulfates with Heating 1", THE JOURNAL OF PHYSICAL CHEMISTRY, vol. 69, no. 12, 1 December 1965 (1965-12-01), pages 4077-4084, XP093155515, ISSN: 0022-3654, DOI: 10.1021/j100782a005 Retrieved from the Internet: URL:https://pubs.acs.org/doi/pdf/10.1021/j100782a005> | 5-8 | |
| | | | TECHNICAL FIELDS SEARCHED (IPC) |
| Y | * page 4078 – page 4084 * ----- | 1-4 | C01G |
| X | Pubchem: "Nickel sulfate", , 4 April 2022 (2022-04-04), pages 1-1, XP093155560, Retrieved from the Internet: URL:https://web.archive.org/web/20230301000000*/https://pubchem.ncbi.nlm.nih.gov/compound/Nickel-Sulfate | 5-8 | |
| Y | * page 1 * ----- | 1-4 | |

-/--

The present search report has been drawn up for all claims

| Place of search | Date of completion of the search | Examiner |
|---|---|---|
| Munich | 25 April 2024 | Doslik, Natasa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

**EP 23 20 5837**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANISA SURYA WIJARENI: "Morphology and Particle Size of a Synthesized NMC 811 Cathode Precursor with Mixed Hydroxide Precipitate and Nickel Sulfate as Nickel Sources and Comparison of Their Electrochemical Performances in an NMC 811 Lithium-Ion Battery", ENERGIES, vol. 15, no. 16, 10 August 2022 (2022-08-10), page 5794, XP093155506, CH ISSN: 1996-1073, DOI: 10.3390/en15165794 * page 2 - page 5 * | 1-4 | |
| Y | JP 2022 508083 A (BASF SE) 19 January 2022 (2022-01-19) * paragraph [0021]; examples * | 1-4 | |

TECHNICAL FIELDS SEARCHED (IPC)

The present search report has been drawn up for all claims

| Place of search | Date of completion of the search | Examiner |
|---|---|---|
| Munich | 25 April 2024 | Doslik, Natasa |

EPO FORM 1503 03.82 (P04C01)

## ANNEX TO THE EUROPEAN SEARCH REPORT
## ON EUROPEAN PATENT APPLICATION NO.

EP 23 20 5837

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | Publication date | Patent family member(s) | | Publication date |
|---|---|---|---|---|
| JP 2022508083 A | 19-01-2022 | AU | 2019376818 A1 | 27-05-2021 |
| | | CN | 112969666 A | 15-06-2021 |
| | | EP | 3877338 A1 | 15-09-2021 |
| | | JP | 2022508083 A | 19-01-2022 |
| | | KR | 20210089715 A | 16-07-2021 |
| | | US | 2021371298 A1 | 02-12-2021 |
| | | WO | 2020094482 A1 | 14-05-2020 |

EPO FORM P0459

For more details about this annex : see Official Journal of the European Patent Office, No. 12/82